# EUROPÄISCHE PATENTANMELDUNG

(11) **EP 4 741 907 A1**
(43) Veröffentlichungstag der Anmeldung: **13.05.2026**
(21) Anmeldenummer: 25210521.8
(22) Anmeldetag: 22.10.2025
(51) Int. Cl.: G02B 27/00, G02B 27/01, G02F 1/1333

(54) **ANZEIGEVORRICHTUNG MIT STÖRLICHTUNTERDRÜCKUNG**

(30) Priorität: 11.11.2024 DE 102024210820
(71) Anmelder: AUMOVIO Germany GmbH, 60488 Frankfurt am Main (DE)
(72) Erfinder: Kreipe, Hans-Peter, 60488 Frankfurt am Main (DE); Habermehl, Kai, 60488 Frankfurt am Main (DE)
(74) Vertreter: Aumovio Corporation

(57) **Zusammenfassung**

Die vorliegende Erfindung betrifft eine Anzeigevorrichtung (1) mit Störlichtunterdrückung. Die Anzeigevorrichtung (1) weist ein Anzeigepanel (2) und ein auf einer Oberseite (20) des Anzeigepanels (2) angeordnetes transparentes Element (3) auf. Das Material des transparenten Elements (3) ist so gewählt, dass beim Übergang vom Anzeigepanel (2) zum transparenten Element (3) kein Brechungsindexsprung auftritt. Das transparente Element (3) weist eine gekrümmte Oberseite (30) auf, die ausgestaltet ist, einfallendes Störlicht (SL) in Richtung einer Lichtfalle (LF) abzulenken.

## Beschreibung

Die vorliegende Erfindung betrifft eine Anzeigevorrichtung mit Störlichtunterdrückung.

Anzahl und Fläche von Anzeigevorrichtungen in Fortbewegungsmitteln steigen ständig an. Anzeigevorrichtungen sind beispielsweise als Kombiinstrument für den Fahrer, als Zentraldisplay und auch als Beifahrerdisplay im Markt anzutreffen.

Zunehmend sind in Fortbewegungsmittels auch Head-up Displays anzutreffen. Unter einem Head-up-Display, auch als HUD bezeichnet, wird ein Anzeigesystem verstanden, bei dem der Betrachter seine Betrachtungsrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-up-Displays bestehen im Allgemeinen aus einer bildgebenden Einheit oder PGU (Picture Generating Unit), einer Optikeinheit und einer Spiegeleinheit. Die bildgebende Einheit erzeugt das Bild und nutzt dazu zumindest ein Anzeigeelement. Die meisten heutigen Head-up-Displays verwenden zur Bildgenerierung LCD-basierte Displays (LCD: Liquid Crystal Display; Flüssigkristallanzeige). Die Optikeinheit leitet das Bild auf die Spiegeleinheit. Die Spiegeleinheit ist eine teilweise spiegelnde, lichtdurchlässige Scheibe. Der Betrachter sieht also die von der bildgebenden Einheit dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des von der bildgebenden Einheit erzeugten Bildes.

Bei einer alternativen Ausführung werden Displays relativ zur Windschutzscheibe so angeordnet, dass eine Sicht auf diese Displays über die Windschutzscheibe gegeben ist und die virtuelle Tiefe direkt mit dem Abstand zur Windschutzscheibe gegeben ist. Solche Displays werden als Scenic-View Display bezeichnet. Derzeit erfolgt die Spiegelung der Bildinhalte der Scenic-View Displays über einen schwarz eingefärbten Bereich der Windschutzscheibe, um einen direkten Einfall von Sonnenlicht oder Licht anderer Lichtquellen auf das Display zu vermeiden. Ohne diesen schwarz eingefärbten Bereich in der Windschutzscheibe kann das Sonnenlicht oder Fremdlicht direkt auf das Display gelangen und als Rückreflektion oder Rückstreuung mit dem Bildinhalt überlagert werden. Dies kann zur Ablenkung oder Störung des Fahrers führen, was unbedingt zu vermeiden ist.

Vor diesem Hintergrund beschreibt DE 10 2010 032 998 A1 ein Head-up-Display für ein Kraftfahrzeug, mit einer Projektionseinrichtung, über welche ein anzuzeigendes Bild auf eine als Kombiniereinrichtung wirkende Frontscheibe des Kraftfahrzeugs projiziert wird. Die Projektionseinrichtung weist zur Frontscheibe gerichtet eine semitransparente Abdeckung auf, die zur Reflexion von von außen auf die Abdeckung auftreffendem Fremdlicht auf eine Absorberfläche ausgebildet ist. Die Absorberfläche wird wenigstens teilweise durch eine innenseitige Beschichtung der Frontscheibe gebildet.

WO 2019/238849 A1 beschreibt ein Gerät zum Generieren eines virtuellen Bildes mit Störlichtunterdrückung. Das Gerät weist eine Lichtquelle, ein Anzeigeelement zum Erzeugen eines Bildes und ein Blendschutzelement auf. Das Blendschutzelement weist eine gekrümmte Oberfläche auf.

Es ist eine Aufgabe der Erfindung, eine verbesserte Anzeigevorrichtung mit Störlichtunterdrückung bereitzustellen.

Diese Aufgabe wird durch eine Anzeigevorrichtung mit den Merkmalen des Anspruchs 1 gelöst. Bevorzugte Ausgestaltungen der Erfindung sind Gegenstand der abhängigen Ansprüche.

Gemäß einem ersten Aspekt der Erfindung weist eine Anzeigevorrichtung ein Anzeigepanel und ein auf einer Oberseite des Anzeigepanels angeordnetes transparentes Element auf. Das Material des transparenten Elements ist so gewählt, dass beim Übergang vom Anzeigepanel zum transparenten Element kein Brechungsindexsprung auftritt. Das transparente Element weist eine gekrümmte Oberseite auf, die ausgestaltet ist, einfallendes Störlicht in Richtung einer Lichtfalle abzulenken.

Bei der erfindungsgemäßen Lösung wird das Anzeigepanel unter eine Abdeckung platziert, deren Oberfläche so gekrümmt ist, dass es zu einer passenden Ablenkung des einfallenden Lichts kommt. Die Oberfläche wird dabei den Anforderungen einer geometrischen Entspiegelung gerecht. Zusätzlich ist das Material der Abdeckung so gewählt, dass es keinen Indexsprung von der Außenoberfläche bis zum Anzeigepanel gibt. Die Abdeckung ist dazu so geformt, dass der Raum zwischen dem Anzeigepanel und der gekrümmten Oberfläche vollständig mit dem Material der Abdeckung gefüllt ist. Auf diese Weise werden störende Rückreflektionen vermieden. Die Anzeigevorrichtung kann beispielsweise so in einen Schacht eingebaut werden, dass einfallendes Störlicht in eine als Lichtfalle wirkende Schachtwand gelenkt wird.

Gemäß einem Aspekt der Erfindung ist das Anzeigepanel eben ausgeführt. Auf diese Weise kann ein handelsübliches Anzeigepanel für die Realisierung der Anzeigevorrichtung genutzt werden, was hinsichtlich der Herstellungskosten vorteilhaft ist.

Gemäß einem Aspekt der Erfindung ist das Anzeigepanel relativ zu einer Betrachtungsrichtung schräg angeordnet. Dies erlaubt es, die Krümmung des transparenten Elements über die Fläche des Anzeigepanels zu vermitteln. Auf diese Weise wird weniger Material für die Herstellung des transparenten Elements benötigt, was hinsichtlich der Materialkosten und des Gewichts des Gesamtsystems von Vorteil ist.

Gemäß einem Aspekt der Erfindung ist das Anzeigepanel gekrümmt ausgeführt. Bei dieser Ausführungsform wird ein speziell geformtes Anzeigepanel benötigt. Im Gegenzug kann aber das transparente Element sehr dünn ausgeführt werden, was zu einem verringerten Gewicht des Gesamtsystems führt.

Gemäß einem Aspekt der Erfindung weist die Anzeigevorrichtung eine transparente Scheibe auf, die ausgestaltet ist, ein vom Anzeigepanel angezeigtes Bild in Richtung eines Betrachters zu reflektieren. Die Verwendung einer transparenten Scheibe, beispielsweise der Windschutzscheibe eines Kraftfahrzeugs, erlaubt es ein Scenic-View Display zu realisieren.

Gemäß einem Aspekt der Erfindung weist die transparente Scheibe einen geschwärzten Bereich auf. Einige Bildanteile des Anzeigebereichs des Anzeigepanels werden dann über den geschwärzten Bereich der Scheibe reflektiert, andere Bildanteile über den transparenten Bereich der Scheibe. Die Platzierung der Lichtfalle kann dabei individuell entsprechend der gewünschten Umsetzung des Gesamtsystems gewählt werden.

Gemäß einem Aspekt der Erfindung weist die Anzeigevorrichtung eine Hinterleuchtung auf, die derart ausgestaltet ist, dass von der Hinterleuchtung abgestrahltes Licht die Kopfposition eines oder mehrerer Betrachter ausleuchtet. Beispielsweise kann das Licht zur Hinterleuchtung des Anzeigepanels so geformt werden, dass es die Kopfposition eines Fahrer eines Kraftfahrzeugs ausleuchtet oder dass ein schmaler Lichtkegel von der Kopfposition des Fahrers bis zur Kopfposition eines Beifahrers ausgeleuchtet wird.

Gemäß einem Aspekt der Erfindung ist die Lichtfalle als lichtabsorbierende Wand ausgestaltet. Auf diese Weise kann sichergestellt werden, dass keine störenden Lichtreflexe von der Lichtfalle ausgehen.

Gemäß einem Aspekt der Erfindung bildet die Anzeigevorrichtung für sich genommen oder in Kombination mit weiteren Anzeigevorrichtungen ein Displayband. Bei einem solchen Displayband ist die Breite des gemeinsamen Anzeigebereichs deutlich größer als die Höhe des Anzeigebereichs. Die Ausgestaltung als Displayband erlaubt es beispielsweise, ein Display zu realisieren, das sich über die gesamte Breite oder zumindest nahezu die gesamte Breite einer Armaturentafel eines Kraftfahrzeugs erstreckt.

Gemäß einem Aspekt der Erfindung ist eine Lichtformung in dem Displayband so umgesetzt, dass für zumindest einen Teil des Displaybandes Bildinhalte dauerhaft und/oder schaltbar nur für eine von mehreren Betrachterpositionen sichtbar sind. Beispielsweise kann die Lichtformung so umgesetzt werden, dass bestimmte Bildinhalte nur für den Fahrer oder nur für den Beifahrer eines Kraftfahrzeugs sichtbar sind. Dies kann einerseits dauerhaft der Fall sein, es ist aber ebenso möglich, dass die Sichtbarkeit der Bildinhalte bei Bedarf individuell geschaltet werden kann. Zudem ist über die Lichtformung eine Umschaltung zwischen einem Betriebsmodus mit uneingeschränkter Sichtmodus (engl. Public Mode) und einem Betriebsmodus mit eingeschränkter Sichtbarkeit (engl. Privacy Mode) möglich, d.h. das Gesamtsystem kann als Display mit schaltbarer Privatsphäre (engl. Switchable Privacy Display) ausgestaltet sein.

Vorzugsweise wird eine erfindungsgemäße Anzeigevorrichtung in einem Fortbewegungsmittel eingesetzt. Bei dem Fortbewegungsmittel kann es sich beispielsweise um ein Kraftfahrzeug handeln, alternativ aber auch um ein Luftfahrzeug, ein Schienenfahrzeug oder ein Wasserfahrzeug. Eine Nutzung der erfindungsgemäßen Lösung kommt dabei insbesondere für alle Display- und Head-up-Display-Systeme in Betracht, bei denen eine Störlichtunterdrückung notwendig oder wünschenswert ist. Darüber hinaus kann eine erfindungsgemäße Anzeigevorrichtung aber auch für Kinos, augennahe Displays oder Multimedia-Anwendungen im Allgemeinen genutzt werden.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein erstes Ausführungsbeispiel einer erfindungsgemäßen Anzeigevorrichtung;
- Fig. 2: zeigt schematisch ein zweites Ausführungsbeispiel einer erfindungsgemäßen Anzeigevorrichtung;
- Fig. 3: zeigt schematisch ein drittes Ausführungsbeispiel einer erfindungsgemäßen Anzeigevorrichtung;
- Fig. 4: zeigt schematisch ein viertes Ausführungsbeispiel einer erfindungsgemäßen Anzeigevorrichtung;
- Fig. 5: zeigt schematisch ein erstes Ausführungsbeispiel einer Hinterleuchtung;
- Fig. 6: zeigt schematisch ein zweites Ausführungsbeispiel einer Hinterleuchtung; und
- Fig. 7: zeigt schematisch ein Fortbewegungsmittel, das eine erfindungsgemäße Anzeigevorrichtung nutzt.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

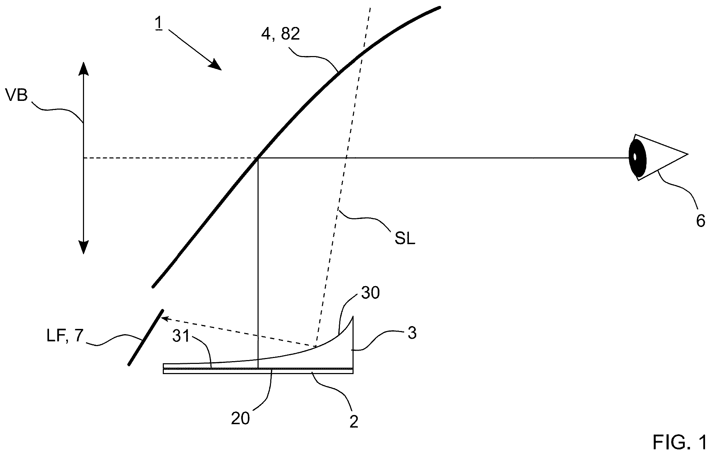

Fig. 1 zeigt schematisch ein erstes Ausführungsbeispiel einer erfindungsgemäßen Anzeigevorrichtung 1. Die Anzeigevorrichtung 1 weist ein Anzeigepanel 2 und ein auf einer Oberseite 20 des Anzeigepanels 2 angeordnetes transparentes Element 3 auf. Das transparente Element 3 weist eine gekrümmte Oberseite 30 auf, die ausgestaltet ist, einfallendes Störlicht SL in Richtung einer Lichtfalle LF abzulenken. Die Lichtfalle LF kann beispielsweise durch eine lichtabsorbierende Wand 7 eines Schachts gebildet sein, in den die Anzeigevorrichtung 1 bzw. das Anzeigepanel 2 und das transparente Element 3 eingebaut sind. In Fig. 1 ist anstelle eines solchen Schachts lediglich die lichtabsorbierende Wand 7 gezeigt.

Das Material des transparenten Elements 3 ist so gewählt, dass beim Übergang vom Anzeigepanel 2 zum transparenten Element 3 kein Brechungsindexsprung auftritt. Das transparente Element 3 ist dazu so geformt, dass seine Unterseite 31 auf der Oberseite 20 des Anzeigepanels 2 aufliegt und somit der Raum zwischen dem Anzeigepanel 2 und der gekrümmten Oberseite 30 vollständig mit dem Material des transparenten Elements 3 gefüllt ist. Das vom Anzeigepanel 2 ausgehende Licht L wird mittels einer transparenten Scheibe 4, hier der Windschutzscheibe 82 eines Kraftfahrzeugs, in Richtung eines Betrachters 6 reflektiert. Der Betrachter 6 sieht ein virtuelles Bild VB, dessen virtuelle Tiefe durch den Abstand des Anzeigepanels 2 zur Windschutzscheibe 82 gegeben ist.

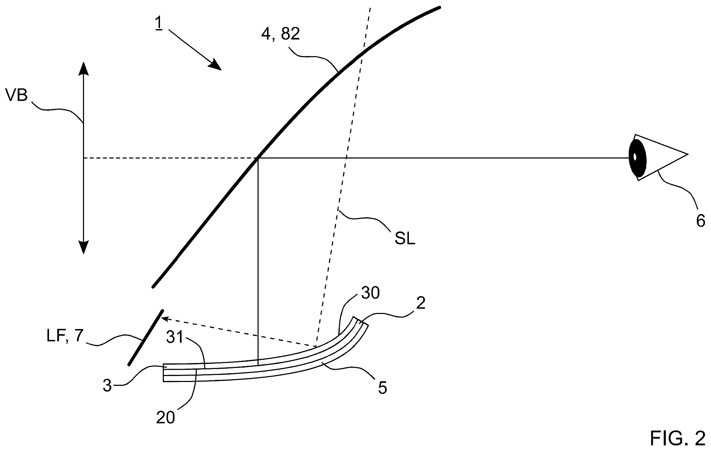

Fig. 2 zeigt schematisch ein zweites Ausführungsbeispiel einer erfindungsgemäßen Anzeigevorrichtung 1. Bei diesem Ausführungsbeispiel weit die Anzeigevorrichtung 1 ein gekrümmtes Anzeigepanel 2 und eine daran angepasst gekrümmte Hinterleuchtung 5 auf. Durch die Krümmung des Anzeigepanels 2 kann das transparente Element 3 sehr dünn ausgeführt werden. Dies führt zu einem verringerten Gewicht des Gesamtsystems.

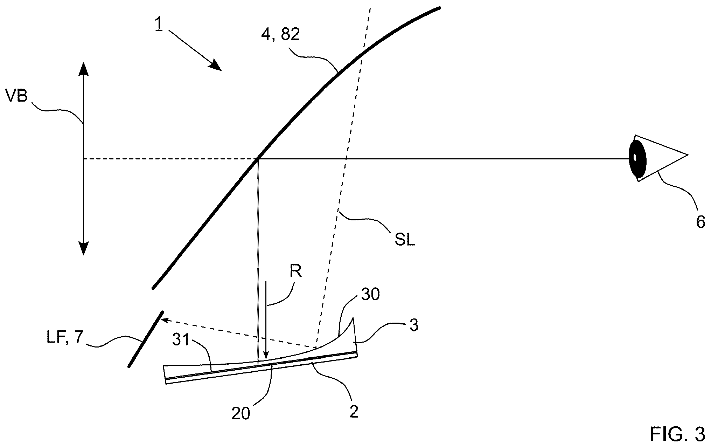

Fig. 3 zeigt schematisch ein drittes Ausführungsbeispiel einer erfindungsgemäßen Anzeigevorrichtung 1. Das Ausführungsbeispiel entspricht weitgehend dem Ausführungsbeispiel aus Fig. 1, allerdings ist ein ebenes Anzeigepanel 2 verbaut, das relativ zu einer Betrachtungsrichtung R schräg angeordnet ist. Dies erlaubt es, die Krümmung des transparenten Elements 3 über die Fläche des Anzeigepanels 2 zu vermitteln. Auf diese Weise wird weniger Material für die Herstellung des transparenten Elements 3 benötigt, was hinsichtlich der Materialkosten und des Gewichts des Gesamtsystems von Vorteil ist

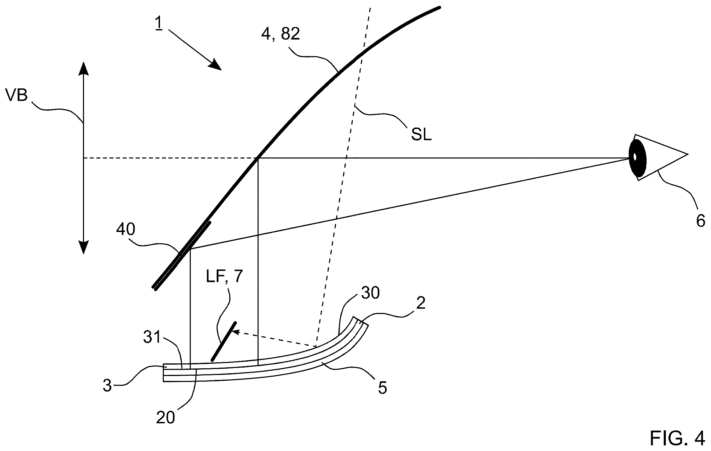

Fig. 4 zeigt schematisch ein viertes Ausführungsbeispiel einer erfindungsgemäßen Anzeigevorrichtung 1. Das Ausführungsbeispiel entspricht weitgehend dem Ausführungsbeispiel aus Fig. 2, allerdings weist die transparente Scheibe 4, hier die Windschutzscheibe 82, einen geschwärzten Bereich 40 auf. Einige Bildanteile des Anzeigebereichs des Anzeigepanels 2 werden dann über den geschwärzten Bereich 40 der Scheibe 4 reflektiert, andere Bildanteile über den transparenten Bereich der Scheibe 4. Die Platzierung der Lichtfalle LF kann dabei individuell entsprechend der gewünschten Umsetzung des Gesamtsystems gewählt werden.

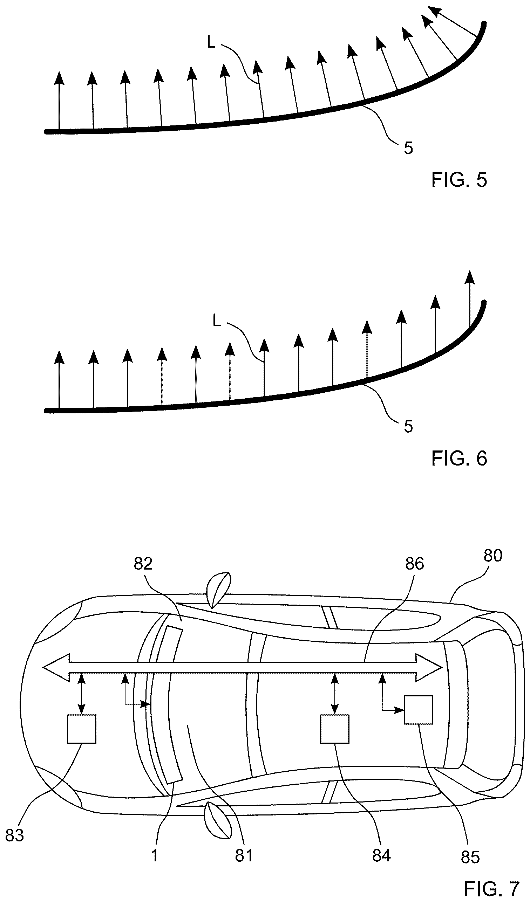

Fig. 5 zeigt schematisch ein erstes Ausführungsbeispiel einer Hinterleuchtung 5. Bei diesem Ausführungsbeispiel erfolgt die durch die Pfeile veranschaulichte Hinterleuchtung senkrecht zur Oberfläche des Anzeigepanels. Ein zweites zweites Ausführungsbeispiel einer Hinterleuchtung 5 ist schematisch in Fig. 6 gezeigt. Bei diesem Ausführungsbeispiel erfolgt die durch die Pfeile veranschaulichte Hinterleuchtung parallel zur Betrachtungsrichtung. Dabei kann das Anzeigepanel senkrecht oder alternativ schräg zur Betrachtungsrichtung angeordnet sein. Die Lichtformung durch die Hinterleuchtung 5 ermöglicht es, dass von der Hinterleuchtung 5 abgestrahltes Licht L die Kopfposition eines oder mehrerer Betrachter ausleuchtet. Beispielsweise kann das Licht L zur Hinterleuchtung des Anzeigepanels so geformt werden, dass es die Kopfposition eines Fahrer eines Kraftfahrzeugs ausleuchtet oder dass ein schmaler Lichtkegel von der Kopfposition des Fahrers bis zur Kopfposition eines Beifahrers ausgeleuchtet wird.

Fig. 7 zeigt schematisch ein Fortbewegungsmittel 80, das eine erfindungsgemäße Anzeigevorrichtung 1 nutzt. Bei dem Fortbewegungsmittel 80 handelt es sich in diesem Beispiel um ein Kraftfahrzeug. Das Kraftfahrzeug weist eine erfindungsgemäße Anzeigevorrichtung 1 auf, im dargestellten Beispiel in Form eines Scenic-View-Displays, das in einer Armaturentafel 81 unterhalb der Windschutzscheibe 82 angeordnet ist. Die Anzeigevorrichtung 1 kann beispielsweise genutzt werden, um Anweisungen eines Navigationssystems 83 anzuzeigen. Mittels einer Datenübertragungseinheit 84 kann eine Verbindung zu einem Backend aufgebaut werden, beispielsweise um aktualisierte Software für Komponenten des Kraftfahrzeugs zu beziehen. Zur Speicherung von Daten ist ein Speicher 85 vorhanden. Der Datenaustausch zwischen den verschiedenen Komponenten des Kraftfahrzeugs erfolgt über ein Netzwerk 86.

### Bezugszeichenliste

- 1: Anzeigevorrichtung
- 2: Anzeigepanel
- 20: Oberseite des Anzeigepanels
- 3: Transparentes Element
- 30: Oberseite des transparenten Elements
- 31: Unterseite des transparenten Elements
- 4: Transparente Scheibe
- 40: Geschwärzter Bereich
- 5: Hinterleuchtung
- 6: Betrachter
- 7: Lichtabsorbierende Wand

- 80: Fortbewegungsmittel
- 81: Armaturentafel
- 82: Windschutzscheibe
- 83: Navigationssystem
- 84: Datenübertragungseinheit
- 85: Speicher
- 86: Netzwerk

- L: Licht
- LF: Lichtfalle
- R: Betrachtungsrichtung
- SL: Störlicht
- VB: Virtuelles Bild

## Patentansprüche

1. Anzeigevorrichtung (1) mit:
- einem Anzeigepanel (2); und
- einem auf einer Oberseite (20) des Anzeigepanels (2) angeordneten transparentem Element (3);
wobei das Material des transparenten Elements (3) so gewählt ist, dass beim Übergang vom Anzeigepanel (2) zum transparenten Element (3) kein Brechungsindexsprung auftritt, und wobei das transparente Element (3) eine gekrümmte Oberseite (30) aufweist, die ausgestaltet ist, einfallendes Störlicht (SL) in Richtung einer Lichtfalle (LF) abzulenken.

2. Anzeigevorrichtung (1) gemäß Anspruch 1, wobei das Anzeigepanel (2) eben ausgeführt ist.

3. Anzeigevorrichtung (1) gemäß Anspruch 2, wobei das Anzeigepanel (2) relativ zu einer Betrachtungsrichtung (R) schräg angeordnet ist.

4. Anzeigevorrichtung (1) gemäß Anspruch 1, wobei das Anzeigepanel (2) gekrümmt ausgeführt ist.

5. Anzeigevorrichtung (1) gemäß einem der vorherigen Ansprüche, mit einer transparenten Scheibe (4) zum Reflektieren eines vom Anzeigepanel (2) angezeigten Bildes in Richtung eines Betrachters (6).

6. Anzeigevorrichtung (1) gemäß Anspruch 5, wobei die transparente Scheibe (4) einen geschwärzten Bereich (40) aufweist.

7. Anzeigevorrichtung (1) gemäß einem der vorherigen Ansprüche, mit einer Hinterleuchtung (5), die derart ausgestaltet ist, dass von der Hinterleuchtung (5) abgestrahltes Licht (L) die Kopfposition eines oder mehrerer Betrachter (6) ausleuchtet.

8. Anzeigevorrichtung (1) gemäß einem der vorherigen Ansprüche, wobei die Lichtfalle (LF) als lichtabsorbierende Wand (7) ausgestaltet ist.

9. Anzeigevorrichtung (1) gemäß einem der vorherigen Ansprüche, wobei die Anzeigevorrichtung (1) für sich genommen oder in Kombination mit weiteren Anzeigevorrichtungen (1) ein Displayband bildet.

10. Anzeigevorrichtung (1) gemäß Anspruch 9, wobei eine Lichtformung in dem Displayband so umgesetzt ist, dass für zumindest einen Teil des Displaybandes Bildinhalte dauerhaft und/oder schaltbar nur für eine von mehreren Betrachterpositionen sichtbar sind.
